# FASCICULE DE BREVET EUROPEEN

(11) **EP 2 201 425 B1**
(45) Date de publication et mention de la délivrance du brevet: **12.11.2014**
(21) Numéro de dépôt: 08841796.9
(22) Date de dépôt: 08.10.2008
(51) Int. Cl.: G02F 1/157, B60K 37/00, G02B 27/01, G02B 5/08

(54) **PERFECTIONNEMENTS APPORTÉS À DES ÉCRANS DE VISUALISATION**
VERBESSERUNGEN AN ANZEIGEBILDSCHIRMEN
IMPROVEMENTS MADE TO VIEWING SCREENS

(30) Priorité: 12.10.2007 FR 0758287
(43) Date de publication de la demande: 30.06.2010
(73) Titulaire: Saint-Gobain Glass France, 92400 Courbevoie (FR)
(72) Inventeur: MATTMANN, Eric, F-75013 Paris (FR); ORILLARD, Julien, F-75015 Paris (FR); VALENTIN, Emmanuel, F-94420 Le Plessis Trevise (FR); DUBRENAT, Samuel, F-75017 Paris (FR); FISCHER, Klaus, F-52477 Alsdorf (DE); GIRON, Jean-Christophe, F-4700 Eupen (BE)
(74) Mandataire: Neuviale, Bertrand
(86) Numéro de dépôt international: PCT/FR2008/051818
(87) Numéro de publication internationale: WO 2009/053609

(56) Documents cités:
- EP-A- 0 825 478
- WO-A-91/06031
- WO-A-2005/009914
- WO-A-2005/075371
- FR-A- 2 721 872
- JP-A- 60 140 201
- US-A- 5 237 455

## Description

La présente invention est relative à des perfectionnements apportés à des écrans de visualisation permettant de transmettre des informations à l'utilisateur via par exemple le tableau de bord d'une automobile, ou d'un quelconque moyen de transport terrestre ou aérien.

Une des solutions déjà rencontrées consiste dans l'utilisation d'un cluster. Un cluster est en fait un cadran/display unique concentrant toutes les informations devant être visualisées. Pour pouvoir inclure plus d'informations dans un espace limité, la solution retenue réside dans la superposition de celles-ci. Ce type de système peut par exemple se présenter sous la forme d'un tachymètre et de voyants classiques devant lesquels des informations de type GPS, fonctionnement d'un véhicule, d'une caméra de recul ou tout autre image pourraient apparaître.

Actuellement, une solution technique pour réaliser ce type de système consiste à ajouter une plaque de plastique, par exemple en PMMA sombre en regard du tachymètre. L'orientation de cette plaque permet de refléter un écran LCD (ou autre) placé dans la partie haute du système. Ainsi, pour visualiser le tachymètre, il suffit d'illuminer celui-ci et d'arrêter l'écran LCD. Inversement, lorsque l'écran LCD projette, le tachymètre n'est pas éclairé.

Cependant, l'utilisation de la plaque de PMMA à plusieurs inconvénients :
- elle doit être sombre (TL d'environ 20%) pour masquer efficacement le tachymètre lorsque celui-ci n'est pas illuminé. Une illumination importante du tachymètre est donc nécessaire pour avoir une lisibilité correcte. L'illumination requise induit une consommation électrique et un échauffement important du combiné d'instruments et de l'écran LCD.
- Cette basse valeur de TL permet une projection efficace de l'image notamment en limitant la réflexion sur la face 2 et de ce fait le phénomène de double image décrit ci après. Cependant la valeur de contraste en réflexion (RL face 1/RL face 2) de l'image projetée par le LCD est limitée (environ 20) et ne permet pas une bonne visualisation lorsque la luminosité ambiante est importante (par exemple en plein soleil). Le LCD doit alors fonctionner sous luminosité élevée induisant également des problèmes de surconsommation et d'échauffement.

Une deuxième solution technique permettant de résoudre ces problèmes de surconsommation énergétique et d'échauffement consécutif consiste en l'utilisation d'un vitrage feuilleté comportant un système actif électrocommandable, par exemple incorporant un système électrochrome. Le vitrage feuilleté est utilisé en tant que façade devant un tableau de bord de véhicule. Positionné devant ce dernier, lorsque le système actif est coloré, il obscurcit le tableau de bord masquant de ce fait les informations ou les différents cadrans (compte tour, indicateur de vitesse, de température, écran de visualisation, montre, ...) n'apparaissant pas au niveau de tableau bord. Cet état coloré du système actif permet d'avoir un rendu particulièrement esthétique de l'ensemble de la planche de bord. Cette situation peut constituer soit la position arrêt du véhicule soit la position marche du véhicule).

Au contraire dans un état décoloré du système actif, le vitrage feuilleté positionné en façade devant le tableau de bord n'entrave pas la vision par le conducteur des informations émanant du tableau de bord et le tableau de bord ne voit pas sa fonctionnalité affectée. Les cadrans sont donc visibles. Une lumière d'appoint peut également être utilisée pour distinguer les informations.

En effet, le système électrochrome, dans son état de transmission lumineuse maximale (typiquement > 50 %), il est possible d'augmenter la lisibilité du tachymètre sans avoir recours à une illumination importante de celui-ci (pas de surconsommation énergétique induisant d'échauffement). Dans son état de transmission lumineuse minimale (TL < 20%), le vitrage jouerait un rôle d'écran de projection au moins identique à celui de la plaque en PMMA.

La solution technique basée sur l'électrochrome permet effectivement ce résultat mais induit un problème nouveau. Du fait de la configuration feuilletée, des interfaces supplémentaires sont générées, augmentant le nombre de projections possibles. Plusieurs images peuvent donc être réfléchies avec un décalage induit par l'orientation du substrat conjuguée aux épaisseurs entre les interfaces et à la position relative de l'utilisateur par rapport au cluster (angle incidence de son regard par rapport à l'image projetée).

Le document FR 2721872 décrit un système de visulation comprenant un élément électrochrome associé à une plaque semi-réfléchissante.

La présente invention vise à pallier les inconvénients des techniques antérieures en proposant une solution basée sur l'utilisation des systèmes électrocommandables mais qui n'induisent pas de déformation optique de l'image.

A cet effet, la présente invention a pour objet un vitrage tel que défini dans la revendication 1.

Grâce à cette configuration, on obtient une image projetée sans double réflexion et avec un contraste élevé car :
- la réflexion sur la face 1 du premier substrat est minimisée
- la différence d'indice sur la face 2 du premier substrat est maximisée pour favoriser la réflexion sur cette face
- Dans son état coloré, le système actif permet d'encore augmenter cette réflexion et de limiter la réflexion sur la face 3 du second substrat.
- L'utilisation d'un verre fin minimise la faible double réflexion encore présente.

Dans des modes de réalisation préférés de l'invention, on peut éventuellement avoir recours en outre à l'une et/ou à l'autre des dispositions suivantes :
- le premier revêtement antireflet comporte un empilement de couches minces en matériau diélectrique d'indices de réfraction alternativement forts et faibles, et se définissant de la façon suivante. Il comporte successivement :
   - une première couche à haut indice, d'indice de réfraction n₁ compris entre 1,8 et 2,3 et d'épaisseur géométrique e₁ comprise entre 5 et 50 nm,
   - une seconde couche à bas indice, d'indice de réfraction n₂ compris entre 1,35 et 1,65, d'épaisseur géométrique e₂ comprise entre 5 et 50 nm,
   - une troisième couche à haut indice, d'indice de réfraction n₃ compris entre 1,8 et 2,3, d'épaisseur géométrique e₃ comprise entre 40 et 150 nm,
   - une quatrième couche à bas indice, d'indice de réfraction n₄ compris entre 1,35 et 1,65, d'épaisseur géométrique e₄ comprise entre 40 et 150 nm,
- la première couche à haut indice et/ou la troisième couche à haut indice sont à base d'oxyde(s) métallique(s) choisi(s) parmi l'oxyde de zinc, l'oxyde d'étain, l'oxyde de zirconium ou à base de nitrure(s) choisi(s) parmi le nitrure de silicium et/ou le nitrure d'aluminium ou à base d'oxydes mixtes étain/zinc (SnxZnyOz), ou d'oxydes mixtes zinc-titane (TiZnOₓ), ou à base d'oxyde mixte silicium/titane (SixTiyOz)
- la seconde couche à bas indice et/ou la quatrième couche à bas indice sont à base d'oxyde de silicium, d'oxynitrure et/ou oxycarbure de silicium ou d'un oxyde mixte de silicium et d'aluminium.
- la première couche à haut indice et/ou la troisième couche à haut indice du traitement exhausteur de réflexion sont à base d'oxyde(s) métallique(s) choisi(s) parmi l'oxyde de titane, oxyde de zirconium, l'oxyde de tantale, de l'oxyde de niobium, l'oxyde de bismuth, utilisé seul ou en mélange,
- la seconde couche à bas indice et éventuellement la quatrième couche à bas indice du traitement exhausteur de réflexion sont à base d'oxyde de silicium, d'oxynitrure et/ou oxycarbure de silicium ou d'un oxyde mixte de silicium et d'aluminium.
- le vitrage est incliné d'un angle compris entre 15 et 75°, préférentiellement entre 30 et 60° par rapport à des rayons incidents émanant d'une source lumineuse
- le vitrage atteint un contraste en réflexion compris entre 10 et 100 entre un état coloré et un état décoloré du système actif,
- le système actif est un système électrochimique, notamment un système électrocommandables à propriétés énergétiques/optiques variables comme un système électrochrome tout solide, polymère, hybride, viologène un système à valve optique.

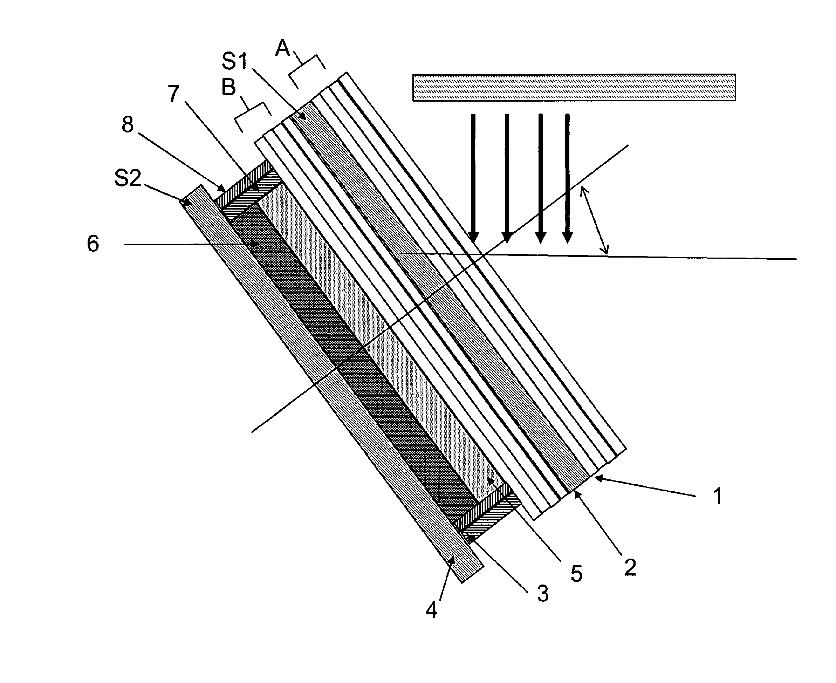

D'autres caractéristiques, détails, avantages de la présente invention apparaîtront mieux à la lecture de la description qui va suivre, faite à titre illustratif et nullement limitatif, en référence à la figure unique annexée sur laquelle :
- la figure unique est une vue schématique du dispositif selon l'invention.

La présente invention concerne les vitrages feuilletés, et plus particulièrement ceux qui présentent des fonctionnalités conférées par une ou plusieurs couches et/ou un ou plusieurs éléments discontinus pouvant être de nature organique, minérale ou hybride organique/minérale. Les vitrages feuilletés sont usuellement constitués de deux substrats rigides entre lesquels est disposée une feuille ou une superposition de feuilles de polymère du type thermoplastique. L'invention inclut aussi les vitrages feuilletés dits « asymétriques » utilisant un substrat seul rigide du type verre associé à plusieurs feuilles de polymère, dont généralement une au moins à base de polyuréthane. L'invention inclut aussi les vitrages feuilletés ayant au moins une feuille intercalaire à base d'un polymère adhésif simple ou double face du type élastomère (c'est-à-dire ne nécessitant pas une opération de feuilletage au sens classique du terme, feuilletage imposant un chauffage généralement sous pression pour ramollir et rendre adhérente la feuille intercalaire thermoplastique).

Comme on le verra plus loin dans le texte, si on utilise un système actif de type polymère en gel, ce dernier est encapsulé entre les deux substrats au niveau des électrodes respectives, et sans présence d'intercalaire de feuilletage.

Les couches ou éléments discontinus évoqués ci-dessus se trouvent généralement disposés contre ou sur un des substrats rigides (ou contre le seul substrat rigide), entre ledit substrat et la feuille ou une des feuilles flexibles à base de polymère. Ils peuvent aussi être disposés entre deux substrats flexibles ou semi-flexibles eux-mêmes associés à un substrat rigide ou disposés entre deux substrats rigides. Ils seront désignés par la suite sous le terme de « systèmes actifs». Le vitrage peut en comporter plusieurs.

Les premiers types de système actif intéressant l'invention sont les systèmes électrochimiques en général, et plus particulièrement les systèmes électrocommandables du type vitrage à propriétés énergétiques et/ou optiques variables.

Les systèmes électrocommandables permettent, notamment, d'obtenir des vitrages dont on peut modifier à volonté l'obscurcissement/le degré de vision ou de filtration des rayonnements thermiques/solaires. Il s'agit par exemple des vitrages viologènes, qui permettent de régler la transmission ou l'absorption lumineuse, comme ceux décrits dans les brevets US-5 239 406 et EP-612 82.

Il y a aussi les vitrages électrochromes, qui permettent de moduler la transmission lumineuse et thermique. Ils sont décrits, notamment, dans les brevets EP-253 713, EP-670 346, l'électrolyte étant sous forme d'un polymère ou d'un gel et les autres couches étant de type minéral. Un autre type est décrit dans les brevets EP-867 752, EP-831 360, PCT/FR00/00675, PCT/FR99/01653, l'électrolyte étant cette fois sous la forme d'une couche essentiellement minérale, l'ensemble des couches du système étant alors essentiellement minérale : on désigne communément ce type de système électrochrome sous le terme d'électrochrome "tout-solide ". Il existe aussi des systèmes électrochromes où l'ensemble des couches est de type polymère, on parle alors d'électrochrome "tout-polymère ".

De façon générale, les systèmes électrochromes comportent deux couches de matériau électrochrome séparées par une couche d'électrolyte et encadrées par deux couches électroconductrices.

Il existe aussi les systèmes appelés "valves optiques" : il s'agit de films à base de polymère dans lesquels sont disposées des microgouttelettes contenant des particules aptes à se placer selon une direction privilégiée sous l'action d'un champ électrique. Un exemple en est décrit dans le brevet WO93/09460.

Dans le cadre de la présente invention et dans tout le présent texte, il faut prendre le terme « couche » dans son sens le plus large : il peut s'agir aussi bien de matériaux minéraux que de matériaux de type organique, des polymères tout particulièrement, pouvant se présenter sous forme de films de polymère ou même de films de gel. Il peut s'agir de système actif dit hybride à savoir associant des matériaux minérales, inorganiques à des matériaux organiques, polymères.

L'invention sera décrite ci-après plus en détail avec les exemples non limitatifs suivants à l'aide de la figure unique. Cette figure représente, de manière très schématique, un vitrage électrochrome selon l'invention. Les exemples se rapportent tous à un vitrage actif de nature électrochrome " tout solide ".

Sur le dessin annexé, certains éléments peuvent être représentés à des dimensions plus grandes ou plus petites que dans la réalité, et ce afin de faciliter la compréhension des figures.

L'exemple illustré par la figure unique, concerne un vitrage électrochrome. Il comprend successivement, deux verres minces S1, S2, qui sont des verres clairs (ils peuvent aussi être teintés) silico-sodo-calciques, l'épaisseur de chacun des substrats est entre 0.4 mm et 1.8 mm de préférence 0,7 mm ou 0,8 mm,

Les verres S1 et S2 sont de même taille et leurs dimensions sont 150 mm x 150 mm.

Au sens de l'invention et de manière conventionnelle, on définit les faces suivantes :
- face 1 : face externe du substrat S1 dirigée vers la source de rayons lumineux émanant par exemple d'un LCD, et qui fait face à l'utilisateur,
- face 2 : face interne du substrat S1
- face 3 : face interne du substrat S2
- face 4 : face externe du substrat S2, qui fait face par exemple à des cadrans de visualisation d'information

Le verre S1 est feuilleté au verre S2 par une feuille 6 thermoplastique en polyuréthane (PU) de 0,8 mm d'épaisseur (elle peut être remplacée par une feuille d'éthylènevinylacétate (EVA) ou de polyvinylbutyral (PVB) en emprisonnant un empilement 5 de couches actives à fonctionnalité électrochrome ainsi qu'un revêtement B à fonctionnalité exhausteur de réflexion.

La face 1 du substrat S1 est revêtue sur au moins une portion de surface d'un revêtement A à fonctionnalité antireflet.

Ce revêtement à fonctionnalité antireflet A comprend un empilement de couches minces en matériau diélectrique d'indices de réfraction alternativement forts et faibles, et se définissant de la façon suivante. Il comporte successivement :
- une première couche à haut indice, d'indice de réfraction n₁ compris entre 1,8 et 2,3 et d'épaisseur géométrique e₁ comprise entre 5 et 50 nm,
- une seconde couche à bas indice, d'indice de réfraction n₂ compris entre 1,35 et 1,65, d'épaisseur géométrique e₂ comprise entre 5 et 50 nm,
- une troisième couche à haut indice, d'indice de réfraction n₃ compris entre 1,8 et 2,3, d'épaisseur géométrique e₃ comprise entre 40 et 150 nm,
- une quatrième couche à bas indice, d'indice de réfraction n₄ compris entre 1,35 et 1,65, d'épaisseur géométrique e₄ comprise entre 40 et 150 nm,
   - la première couche à haut indice et/ou la troisième couche à haut indice sont à base d'oxyde(s) métallique(s) choisi(s) parmi l'oxyde de zinc, l'oxyde d'étain, l'oxyde de zirconium ou à base de nitrure(s) choisi(s) parmi le nitrure de silicium et/ou le nitrure d'aluminium ou à base d'oxydes mixtes étain/zinc (SnxZnyOz), ou d'oxydes mixtes zinc-titane (TiZnOₓ), ou à base d'oxyde mixte silicium/titane (SixTiyOz)
   - la seconde couche à bas indice et/ou la quatrième couche à bas indice sont à base d'oxyde de silicium, d'oxynitrure et/ou oxycarbure de silicium ou d'un oxyde mixte de silicium et d'aluminium.

Un exemple de réalisation de ce revêtement antireflet A peut être le suivant :
- Si₃N₄(27nm)/SiO₂(22nm)/ Si₃N₄(75nm)/SiO₂(98 nm)

En variante de réalisation, le revêtement antireflet ou l"obtention d'un effet antireflet consiste à utiliser des verres extra-clairs, à très faible teneur en oxyde(s) de fer et faible épaisseur. Il s'agit par exemple des verres commercialisés dans la gamme « DIAMANT » ou dans la gamme « ALBARINO » par Saint-Gobain Glass France. Cet effet antireflet peut résulter également d'une technique de « Etching » (gravure) de la surface du verre.

Une autre variante de réalisation, le revêtement antireflet consiste en une mono-couche d'oxyde de silicium poreux, la porosité du matériau permettant d'en abaisser l'indice de réfraction, cette couche étant déposée apr une technique de sol-gel.

La face 2 du substrat S1 est revêtue sur au moins une portion de surface d'un revêtement B exhausteur de réflexion qui comprend un empilement de couches minces en matériau diélectrique d'indices de réfraction alternativement forts et faibles, il comporte successivement
- une première couche à haut indice, d'indice de réfraction n₁ compris entre 2.0 et 2,5 et d'épaisseur géométrique e₁ comprise entre 5 et 50 nm,
- une seconde couche à bas indice, d'indice de réfraction n₂ compris entre 1,35 et 1,65, d'épaisseur géométrique e₂ comprise entre 40 et 150 nm,
- une troisième couche à haut indice, d'indice de réfraction n₃ compris entre 2.0 et 2,5, d'épaisseur géométrique e₃ comprise entre 15 et 100 nm,
- éventuellement une quatrième couche à bas indice, d'indice de réfraction n₄ compris entre 1,35 et 1,65, d'épaisseur géométrique e₄ comprise entre 40 et 150 nm,
   - la première couche à haut indice et/ou la troisième couche à haut indice sont à base d'oxyde(s) métallique(s) choisi(s) parmi l'oxyde de titane, oxyde de zirconium, l'oxyde de tantale, de l'oxyde de niobium, l'oxyde de bismuth, utilisé seul ou en mélange,
   - la seconde couche à bas indice et/ou la quatrième couche à bas indice sont à base d'oxyde de silicium, d'oxynitrure et/ou oxycarbure de silicium ou d'un oxyde mixte de silicium et d'aluminium.

Un exemple de réalisation de ce revêtement B exhausteur de réflexion peut être le suivant :
- TiO₂(30nm)/SiO₂(95nm)/ TiO₂(60nm)/SiO₂(100 nm)
   Ou
- TiO₂(45nm)/SiO₂(100nm)/ TiO₂(25nm)

Avec ces exemples de revêtement, on maximise la différence d'indice sur la face 2 du substrat S1 (il s'agit d'un miroir semi-transparent) pour favoriser la réflexion sur cette face.

La combinaison des fonctionnalités antireflet A et exhausteur de réflexion B associée à la commutation du système actif 5 qui sera décrit plus loin dans le texte, permet d'obtenir entre un état coloré et l'état décoloré du système actif, un contraste de l'ordre de 70 pour une configuration quadri couches de l'exhausteur de réflexion B, et un contraste de l'ordre de 35 pour la configuration tri couches.

Ce revêtement exhausteur de réflexion B est revêtu par le système actif 5. Dans une configuration de système actif à fonctionnalité électrochrome de type tout solide, celui-ci comporte un empilement actif placé entre deux matériaux conducteurs électroniques appelés aussi collecteurs de courant.

Les collecteurs de courant et l'empilement actif peuvent être soit sensiblement de dimensions et de formes identiques, ou soit sensiblement de dimensions et de formes différentes, et on conçoit alors que le cheminement des collecteurs sera adapté en fonction de la configuration. Par ailleurs, les dimensions des substrats en particulier S1 peuvent être essentiellement supérieures à celles des empilements de couches formant de système actif.

Les collecteurs de courant sont de type métallique ou du type TCO (Transparent Conductive Oxide) en In₂O₃:Sn (ITO), SnO₂:F, ZnO :A1, ou être un multi-couche du type TCO/métal/TCO (ces TCO pouvant être choisis parmi ceux précédemment mentionnés), et le métal étant choisi notamment parmi l'argent, l'or, le platine, le cuivre. Il peut s'agir également d'un multi-couche de type NiCr/métal/NiCr, le métal étant choisi également notamment parmi l'argent, l'or, le platine, le cuivre.

Selon les configurations, ils peuvent être supprimés et dans ce cas des amenées de courant sont directement en contact avec l'empilement actif.

Le substrat S1 incorpore des amenées de courant qui permettent de commander le système actif via une alimentation électrique. Ces amenées de courant sont du type de ceux utilisés pour les vitrages chauffants (à savoir clinquant, fils ou similaire), déposés soit directement sur le verre, ou supportés par l'intercalaire de feuilletage.

Une forme préférée de réalisation du collecteur de courant consiste à déposer sur l'empilement exhausteur de réflexion une première couche SiOC de 50 nm surmontée d'une seconde couche en SnO₂ :F de 400 nm.

Une seconde forme de réalisation du collecteur consiste à déposer sur le revêtement exhausteur de réflexion un bicouche constitué d'une première couche à base de SiO₂ dopée ou non (notamment dopé avec de l'aluminium ou du bore) d'environ 20 nm surmontée d'une seconde couche d'ITO d'environ 100 à 600 nm (deux couches de préférence déposées successivement, sous vide, par pulvérisation cathodique assistée par champ magnétique et réactive en présence d'oxygène éventuellement à chaud).

Une autre forme de réalisation du collecteur consiste à déposer sur le revêtement exhausteur de réflexion une mono couche constituée d'ITO d'environ 100 à 600 nm (une couche de préférence déposée, sous vide, par pulvérisation cathodique assistée par champ magnétique et réactive en présence d'oxygène éventuellement à chaud)

L'autre collecteur de courant est une couche d'ITO de 100 à 600 nm également déposée par pulvérisation cathodique réactive assistée par champ magnétique sur l'empilement actif.

L'empilement actif 5 se décompose de la façon suivante selon une première variante de réalisation :
- une couche de matériau électrochrome anodique en oxyde de nickel de 100 à 300 nm, alliée ou non à d'autres métaux,
- une couche en oxyde de tantale hydraté ou d'oxyde de silice hydraté ou d'oxyde de zirconium hydraté de 100 nm ou un mélange de ces derniers,

- une couche de matériau électrochrome cathodique à base d'oxyde de tungstène de 200 à 500 nm, préférentiellement de 300 et 400 nm, notamment voisine de 370 nm.

Selon une deuxième variante de réalisation, l'empilement actif 5 se décompose de la façon suivante :
- une couche de matériau électrochrome anodique en oxyde de nickel de 100 à 300 nm, alliée ou non à d'autres métaux.
- une couche en oxyde de tungstène hydraté de 100 nm,
- une couche en oxyde de tantale hydraté ou d'oxyde de silice hydraté ou d'oxyde de zirconium hydraté de 100 nm ou un mélange de ces derniers,
- une couche de matériau électrochrome cathodique à base d'oxyde de tungstène hydraté de 200 à 500 nm, préférentiellement de 300 et 400 nm, notamment voisine de 370 nm.

Selon une troisième variante de réalisation, l'empilement actif 5 se décompose de la manière suivante :
- une couche de matériau électrochrome anodique en oxyde d'iridium 70 à 100 nm, alliée ou non à d'autres métaux.
- une couche en oxyde de tungstène hydraté de 100 nm,
- une couche en oxyde de tantale hydraté ou d'oxyde de silice hydraté ou d'oxyde de zirconium hydraté de 200 nm ou un mélange de ces derniers,
- une couche de matériau électrochrome cathodique à base d'oxyde de tungstène hydraté de 200 à 500 nm, préférentiellement de 300 et 400 nm, notamment voisine de 370 nm.

L'empilement actif 5 peut être incisé sur tout ou partie de sa périphérie de gorges réalisées par des moyens mécaniques ou par attaque par rayonnement laser, éventuellement pulsé, et ce afin de limiter les fuites électriques périphériques comme cela est décrit dans la demande française FR-2 781 084.

Selon d'autres variantes, l'empilement actif 5 « tout solide » peut être remplacé par d'autres familles d'électrochromes du type polymère ou de type hybride.
- Le système actif 5 comprend et positionné entre les deux électrodes, dans un même milieu, généralement constitué par un gel, les matériaux électroactifs à coloration anodique et cathodique, un ou plusieurs solvants, éventuellement un ou plusieurs polymères et éventuellement un ou plusieurs sels ioniques jouant le rôle d'électrolyte si nécessaire,
- les espèces à coloration anodique sont des composés organiques comme les dérivés de la phénazine comme par exemple la 5,10-dihydrophénazine, de la 1,4-phénylènediamine, de benzidine, de métallocène, de phénothiazine, de carbazole,
- les espèces à coloration cathodique sont des composés organiques comme les dérivés de viologène (sel de bipyridinium) comme les méthyl-viologène tétrafluoroborates ou les octyl-viologène tétrafluoroborates, ou de quinone ou encore de polythiophènes,
- les solvants peuvent être du diméthylsulfoxyde, du N,N-diméthylformamide, du carbonate de propylène, du carbonate d'éthylène, de la N-méthyl pyrolidinone, de la gamma butyrolactone, des liquides ioniques, des éthylène glycols, des alcools, des cétones, des nitriles,
- les polymères peuvent être des polyéthers, des polyesters, des polyamides, des polyimides, des polycarbonates, des polyméthacrylates, des polyacrylates, des polyacétates, des polysilanes, les polysiloxanes, des celluloses,
- les sels ioniques sont par exemple du perchlorate de lithium, des sels de trifluorométhanesulfonate (triflate), des sels de trifluorométhanesulfonylimide, des sels ammoniums ou encore des liquides ioniques,
- la couche active possède une épaisseur de 50 µm à 500 µm et préférentiellement de 150 µm à 300 µm

Selon un autre exemple de réalisation, une première partie formée d'une couche de matériau électrochrome ou autrement appelée couche active, en poly(3, 4-éthylène-dioxythiophène) de 10 à 10000 nm, de préférence de 50 à 500 nm ; en variante il peut s'agir de l'un des dérivés de ce polymère, est déposée par des techniques connues de dépôt par voie liquide (pulvérisation ou « spray coating », trempage ou « dip coating », pulvérisation rotative ou « spin coating » ou par coulée), ou encore par électrodéposition, sur un substrat revêtu de son collecteur de courant, ce collecteur de courant pouvant être une couche conductrice inférieure ou supérieure formant le conducteur électronique (l'anode ou la cathode), éventuellement pourvue de fils ou similaires. Quel que soit le polymère constituant cette couche active, ce polymère est particulièrement stable, notamment au UV, et fonctionne par insertion-désinsertion d'ions lithium (Li⁺) ou alternativement d'ions H⁺.

Une seconde partie jouant le rôle d'électrolyte, et formée d'une couche d'épaisseur comprise entre 50 nm à 2000 µm, et de préférence comprise entre 50 nm à 1000 µm, est déposée par une technique connue de dépôt par voie liquide (pulvérisation ou « spray coating », trempage ou « dip coating », pulvérisation rotative ou « spin coating » ou par coulée, entre les première et troisième parties sur la première partie ou encore par injection. Cette seconde partie est à base de polyoxyalkylène, notamment du polyoxyéthylène. Et peut être associée à une couche d'électrolyte de type minéral, à base par exemple d'oxyde hydraté de tantale, de zirconium ou de silicium (Dans ce cas, il forme un système actif de type hybride).

Cette seconde partie d'électrolyte déposée sur la couche de matériau électrochrome active, elle-même supportée par le substrat en verre ou analogue, est alors revêtue par une troisième partie dont la constitution est analogue à la première partie, à savoir cette troisième partie se décompose en un substrat, revêtu d'un collecteur de courant (fils conducteurs, fils conducteurs + couche conductrice, couche conductrice uniquement), ce collecteur de courant étant lui-même recouvert par une couche active.

Cet exemple correspond à un vitrage fonctionnant par transfert protonique. Il est constitué d'un premier substrat en verre S1, de verre silico-sodo-calcique de 0.8 mm, puis successivement (sur le revêtement exhausteur de réflexion B) :
- une première couche électroconductrice en SnO₂:F de 300 nm,
- une première couche de matériau électrochrome anodique en oxyde de nickel hydraté NiOₓH_{y} de 185 nm, (elle pourrait être remplacée par une couche en oxyde d'iridium hydraté de 55 nm),
- un électrolyte se décomposant en une première couche en oxyde de tantale hydraté de 70 nm, une seconde couche en solution solide de polyoxyéthylène avec de l'acide phosphorique POE-H₃PO₄ de 100 micromètres ou alternativement une solution solide de polyéthylène imine avec de l'acide phosphorique PEI-H₃PO₄, associé à
- une couche en oxyde de tantale hydraté ou d'oxyde de silice hydraté ou d'oxyde de zirconium hydraté de 100 nm ou un mélange de ces derniers,
- une seconde couche de matériau électrochrome cathodique à base d'oxyde de tungstène de 350 nm,
- une seconde couche de SnO₂:F de 300 nm puis un second substrat en verre identique au premier.

On a donc, dans cet exemple, un électrolyte bi-couche à base de polymère habituellement utilisé dans ce type de vitrage, qui est « doublé » d'une couche d'oxyde de tantale hydraté suffisamment conductrice pour ne pas pénaliser le transfert de protons via le polymère et qui protège la contre-électrode en matériau électrochrome anodique du contact direct avec ce dernier, dont l'acidité intrinsèque lui serait préjudiciable.

A la place de la couche en Ta₂O₅ hydraté peut être utilisée une couche de type Sb₂O₅ ou TaWOₓ hydraté.

On peut aussi prévoir un électrolyte tri-couche, avec deux couches d'oxyde hydraté, soit de part et d'autre de la couche de polymère, soit superposées l'une à l'autre du côté de la couche de matériau électrochrome anodique.

Quel que soit le type de système actif 5, le vitrage représenté en figure unique incorpore un premier joint périphérique 7 en contact avec les faces 2 et 3 des substrats S1 et S2, ce premier joint étant adapté pour réaliser une barrière aux agressions chimiques extérieures ainsi qu'une barrière à l'eau sous forme vapeur.

Un exemple de formulation pour ce premier joint 7 est le suivant :
- une base d'étylène-vinylacétate dont de 5 à 40% de vinylacétate et de 40 à 95% d'étylène (il s'agit notamment de l'EVA commercialisé par la société National Starch sous le nom de " Instant Pak 2300 " ou de l'EVA commercialisé par la société TRL sous le nom de " Thermelt 2147/2157), cette base pouvant contenir au moins un des additifs suivants :
- une résine tackifiante
- un agent de réticulation
- une charge

Avec ce type de formulation, on obtient un premier joint 7 qui est à la fois remarquablement imperméable à l'eau sous forme vapeur et très adhérent au verre, ce qui le rend très efficace.

Alternativement, on peut utiliser à la place du joint à base d'EVA un joint à base de polyamide ou de polyisobutylène ou de caoutchouc butyle.

Dans l'exemple précité, le joint est thermofusible (c'est un « hotmelt » selon le terme anglais). Il est mou à température ambiante ou on peut le fondre, puis l'injecter sous pression dans la gorge périphérique du vitrage une fois assemblé. On peut aussi le poser à la périphérie du verre S1 avant son assemblage avec le verre S2, l'opération de feuilletage le calibrant à la section voulue sous l'effet de la pression et éventuellement de la chaleur.

Un deuxième joint 8 périphérique est en contact avec les faces 2 et 3 de S1 et de S2 et est positionné en périphérie du premier joint d'étanchéité 10. Il réalise une barrière d'étanchéité avec l'eau liquide et assure un moyen de renforcement mécanique de la gorge périphérique, évitant aux substrats minces de se briser lors du feuilletage ou lors des manipulations successives.

Ce second joint 8 vient entourer le premier joint d'étanchéité 7 et sert à réaliser l'étanchéité vis-à-vis de l'eau liquide. On peut le déposer :
- par extrusion de polyuréthane PU ou de tout polymère thermoplastique élastomère TPE
- par injection réactive de PU (technique que l'on désigne souvent sous le terme de « RIM » en anglais, pour « Reactive Injection Molding »)
- par injection thermoplastique d'un mélange PVC (polychlorure de vinyle)/TPE
- par injection et vulcanisation de terpolymère d'éthylène, de propylène et d'un diène EPDM.
- par dépôt d'un cadre ou d'une portion de cadre réalisé dans une matière thermoplastique similaire à celle utilisée pour les intercalaires de feuilletage.

Il peut aussi s'agir d'une bande de PU, d'EVA, de PVB, de polyéthylène acrylate, par exemple de même nature que celle de la feuille intercalaire thermoplastique.

La pose peut se faire simultanément ou consécutivement avec celle du premier joint, avant ou après assemblage du vitrage. Il peut être " débordant ", recouvrir les chants des deux verres, ou venir s'accoler au premier joint dans la gorge périphérique du vitrage de façon à ce que l'ensemble des deux joints soit affleurant dans le vitrage feuilleté final.

Comme cela est représenté sur la figure unique, le vitrage objet de l'invention est incliné d'un angle compris entre 15 et 75°, préférentiellement entre 30 et 60°. Les exemples de réalisation précédemment explicités sont optimisés pour une position angulaire sensiblement voisine de 40 à 45°. On comprend aisément que les empilements anti reflet et exhausteur de réflexion peuvent être recalculés en terme de choix des épaisseurs et de la nature des matériaux les constituant (choix du matériau en fonction de son indice de réfraction ni). On optimisera également le vitrage objet de l'invention en fonction des propriétés optiques et particulièrement colorimétriques dans le système CIE (L*,a*, b*) afin que la couleur en réflexion, en fonction de la position angulaire de l'utilisateur, soit globalement neutre.

Le fonctionnement de ce vitrage utilisé en cluster est le suivant :

Dans un état coloré du système actif, l'image projetée est réfléchie par le vitrage objet de l'invention et devient visible, sans déformation optique, par le conducteur.

Dans un état décoloré du système actif, l'image projetée (ou non projetée), n'est pas réfléchie par le vitrage positionné par exemple en façade du tableau de bord, et les informations habituelles venant des indicateurs, compteurs, et similaires du tableau de bord, apparaissent normalement.

L'état coloré du système actif permet d'avoir un rendu particulièrement esthétique de l'ensemble de la planche de bord (en général cette situation constitue la position arrêt du véhicule).

On peut également utiliser le vitrage feuilleté selon l'invention, toujours positionné en façade devant les écrans d'un tableau de bord, en tant qu'écran de visualisation tête haute (en anglais HUD pour Head Up Display).

Le fonctionnement de l'écran de visualisation tête haute est le suivant :

Dans un état coloré du système actif, l'image projetée est réfléchie par l'écran et devient visible, sans déformation optique, par le conducteur.

Dans un état décoloré du système actif, l'image projetée (ou non projetée), n'est pas réfléchie par l'écran positionné en façade du tableau de bord, et les informations habituelles venant des indicateurs, compteurs, et similaires du tableau de bord, apparaissent normalement.

En variante, ce vitrage peut être utilisé pour constituer un rétroviseur, une cloison de séparation de type « privacy », un miroir.

## Revendications

1. Vitrage feuilleté adapté à être utilisé en cluster positionné devant un tableau de bord de véhicule, **caractérisé en ce qu'**il comporte deux substrats (S1, S2) entre lesquels est disposé un système actif possédant un état coloré et un état décoloré, l'un (S1) des substrats étant revêtu sur l'une de ses faces et sur au moins une portion de surface, d'un premier revêtement de couches minces à fonctionnalité antireflet, l'autre face de ce même substrat (S1) étant revêtu sur au moins une portion de surface, d'un second revêtement de couches minces à fonctionnalité exhausteur de réflexion, le second revêtement exhausteur de réflexion étant revêtu par ledit système actif, le système actif étant feuilleté par l'intermédiaire d'un intercalaire de feuilletage au second substrat (S2), et **en ce que** le second revêtement exhausteur de réflexion comporte un empilement de couches minces en matériau diélectrique d'indices de réfraction alternativement forts et faibles, et comporte successivement
• une première couche à haut indice, d'indice de réfraction n₁ compris entre 2.0 et 2,5 et d'épaisseur géométrique e₁ comprise entre 5 et 50 nm,
• une seconde couche à bas indice, d'indice de réfraction n₂ compris entre 1,35 et 1,65, d'épaisseur géométrique e₂ comprise entre 40 et 150 nm,
• une troisième couche à haut indice, d'indice de réfraction n₃ compris entre 2.0 et 2,5, d'épaisseur géométrique e₃ comprise entre 15 et 100 nm,
• éventuellement une quatrième couche à bas indice, d'indice de réfraction n₄ compris entre 1,35 et 1,65, d'épaisseur géométrique e₄ comprise entre 40 et 150 nm,
et **en ce que** les premier et second substrats sont des substrats minces dont l'épaisseur de chacun des substrats est entre 0.4 mm et 1.8 mm.

2. Vitrage selon la revendication 1, **caractérisé en ce que** le premier revêtement antireflet comporte un empilement de couches minces en matériau diélectrique d'indices de réfraction alternativement forts et faibles, et se définissant de la façon suivante et comportant successivement :
• une première couche à haut indice, d'indice de réfraction n₁ compris entre 1,8 et 2,3 et d'épaisseur géométrique e₁ comprise entre 5 et 50 nm,
• une seconde couche à bas indice, d'indice de réfraction n₂ compris entre 1,35 et 1,65, d'épaisseur géométrique e₂ comprise entre 5 et 50 nm,
• une troisième couche à haut indice, d'indice de réfraction n₃ compris entre 1,8 et 2,3, d'épaisseur géométrique e₃ comprise entre 40 et 150 nm,
• une quatrième couche à bas indice, d'indice de réfraction n₄ compris entre 1,35 et 1,65, d'épaisseur géométrique e₄ comprise entre 40 et 150 nm.

3. Vitrage selon l'une des revendications 1 ou 2, **caractérisé en ce que** la première couche à haut indice et/ou la troisième couche à haut indice sont à base d'oxyde(s) métallique(s) choisi(s) parmi l'oxyde de zinc, l'oxyde d'étain, l'oxyde de zirconium ou à base de nitrure(s) choisi(s) parmi le nitrure de silicium et/ou le nitrure d'aluminium ou à base d'oxydes mixtes étain/zinc (SnxZnyOz), ou d'oxydes mixtes zinc-titane (TiZnOₓ), ou à base d'oxyde mixte silicium/titane (SixTiyOz).

4. Vitrage selon l'une des revendications 1 ou 2, **caractérisé en ce que** la seconde couche à bas indice et/ou la quatrième couche à bas indice sont à base d'oxyde de silicium, d'oxynitrure et/ou oxycarbure de silicium ou d'un oxyde mixte de silicium et d'aluminium.

5. Vitrage selon la revendication 1, **caractérisé en ce que** la première couche à haut indice et/ou la troisième couche à haut indice sont à base d'oxyde(s) métallique(s) choisi(s) parmi l'oxyde de titane, oxyde de zirconium, l'oxyde de tantale, de l'oxyde de niobium, l'oxyde de bismuth, utilisé seul ou en mélange.

6. Vitrage selon la revendication 1, **caractérisé en ce que** la seconde couche à bas indice et éventuellement la quatrième couche à bas indice sont à base d'oxyde de silicium, d'oxynitrure et/ou oxycarbure de silicium ou d'un oxyde mixte de silicium et d'aluminium.

7. Vitrage selon l'une quelconque des revendications précédentes, **caractérisé en ce qu'**il atteint un contraste compris entre 40 et 100 entre un état coloré et un état décoloré du système actif.

8. Vitrage selon la revendication 1, **caractérisé en ce que** le système actif est un système électrochimique, notamment un système électrocommandables à propriétés énergétiques/optiques variables comme un système électrochrome tout solide, polymère, hybride, viologène un système à valve optique.

9. Vitrage selon l'une quelconque des revendications précédentes, **caractérisé en ce qu'**il est incliné d'un angle compris entre 15 et 75°, préférentiellement de 30 et 60°, préférentiellement voisin de 45° par rapport à des rayons incidents émanant d'une source lumineuse.

10. Vitrage selon l'une des revendications précédentes, **caractérisé en ce qu'**il constitue un vitrage de véhicules automobiles, d'aéronefs, de navires, ou de bâtiments.

11. Vitrage selon la revendication 9 **caractérisé en ce qu'**il est utilisé en tant qu'écran de visualisation tête haute de type « HUD ».

12. Vitrage selon la revendication 9, **caractérisé en ce qu'**il est utilisé en tant que rétroviseur, cloison de séparation, miroir.

## Patentansprüche

1. Verbundverglasung, die dazu ausgelegt ist, als Cluster verwendet zu werden, das vor einem Fahrzeugarmaturenbrett positioniert wird, **dadurch gekennzeichnet, dass** sie zwei Substrate (S1, S2) umfasst, zwischen denen ein aktives System, das einen gefärbten Zustand und einen entfärbten Zustand aufweist, angeordnet ist, wobei eines (S1) der Substrate auf einer seiner Seiten und auf wenigstens einem Flächenabschnitt mit einer ersten Beschichtung aus dünnen Schichten mit Antireflex-Funktionalität überzogen ist, wobei die andere Seite dieses gleichen Substrats (S1) auf wenigstens einem Flächenabschnitt mit einer zweiten Beschichtung aus dünnen Schichten mit Reflexionsverstärker-Funktionalität überzogen ist, wobei die zweite reflexionsverstärkende Beschichtung mit dem aktiven System überzogen ist, wobei das aktive System mittels einer verbindenden Zwischenschicht mit dem zweiten Substrat (S2) verbunden ist, und dass die zweite reflexionsverstärkende Beschichtung einen Stapel von dünnen Schichten aus dielektrischem Material mit abwechselnd hohen und niedrigen Brechungsindizes umfasst sowie nacheinander aufweist
• eine erste Schicht mit hohem Index, mit einem Brechungsindex n₁ zwischen 2,0 und 2,5 und einer geometrischen Dicke e₁ zwischen 5 und 50 nm,
• eine zweite Schicht mit niedrigem Index, mit einem Brechungsindex n₂ zwischen 1,35 und 1,65, einer geometrischen Dicke e₂ zwischen 40 und 150 nm,
• eine dritte Schicht mit hohem Index, mit einem Brechungsindex n₃ zwischen 2,0 und 2,5, einer geometrischen Dicke e₃ zwischen 15 und 100 nm,
• eventuell eine vierte Schicht mit niedrigem Index, mit einem Brechungsindex n₄ zwischen 1,35 und 1,65, einer geometrischen Dicke e₄ zwischen 40 und 150 nm,
und dass das erste und das zweite Substrat dünne Substrate sind, bei denen die Dicke eines jeden der Substrate im Bereich zwischen 0,4 mm und 1,8 mm beträgt.

2. Verglasung nach Anspruch 1, **dadurch gekennzeichnet, dass** die erste Antireflex-Beschichtung einen Stapel von dünnen Schichten aus dielektrischem Material mit abwechselnd hohen und niedrigen Brechungsindizes umfasst, der sich folgendermaßen definiert und nacheinander umfasst:
• eine erste Schicht mit hohem Index, mit einem Brechungsindex n₁ zwischen 1,8 und 2,3 und einer geometrischen Dicke e₁ zwischen 5 und 50 nm,
• eine zweite Schicht mit niedrigem Index, mit einem Brechungsindex n₂ zwischen 1,35 und 1,65, einer geometrischen Dicke e₂ zwischen 5 und 50 nm,
• eine dritte Schicht mit hohem Index, mit einem Brechungsindex n₃ zwischen 1,8 und 2,3, einer geometrischen Dicke e₃ zwischen 40 und 150 nm,
• eine vierte Schicht mit niedrigem Index, mit einem Brechungsindex n₄ zwischen 1,35 und 1,65, einer geometrischen Dicke e₄ zwischen 40 und 150 nm.

3. Verglasung nach einem der Ansprüche 1 oder 2, **dadurch gekennzeichnet, dass** die erste Schicht mit hohem Index und/oder die dritte Schicht mit hohem Index auf der Basis von Metalloxid(en), ausgewählt aus Zinkoxid, Zinnoxid, Zirkoniumoxid, oder auf der Basis von Nitrid(en), ausgewählt aus Siliziumnitrid und/oder Aluminiumnitrid, oder auf der Basis von Zinn/Zink-Mischoxiden (SnxZnyOz) oder von Zink-Titan-Mischoxiden (TiZnOₓ) oder auf der Basis von Silizium/Titan-Mischoxid (SixTiyOz) sind.

4. Verglasung nach einem der Ansprüche 1 oder 2, **dadurch gekennzeichnet, dass** die zweite Schicht mit niedrigem Index und/oder die vierte Schicht mit niedrigem Index auf der Basis von Siliziumoxid, von Siliziumoxinitrid und/oder - oxicarbid oder eines Mischoxids aus Silizium und Aluminium sind.

5. Verglasung nach Anspruch 1, **dadurch gekennzeichnet, dass** die erste Schicht mit hohem Index und/oder die dritte Schicht mit hohem Index auf der Basis von Metalloxid(en), ausgewählt aus Titanoxid, Zirkoniumoxid, Tantaloxid, Nioboxid, Wismutoxid, allein oder als Mischung verwendet, sind.

6. Verglasung nach Anspruch 1, **dadurch gekennzeichnet, dass** die zweite Schicht mit niedrigem Index und eventuell die vierte Schicht mit niedrigem Index auf der Basis von Siliziumoxid, von Siliziumoxinitrid und/oder -oxicarbid oder eines Mischoxids aus Silizium und Aluminium sind.

7. Verglasung nach einem der vorhergehenden Ansprüche, **dadurch gekennzeichnet, dass** sie zwischen einem gefärbten Zustand und einem entfärbten Zustand des aktiven Systems einen Kontrast im Bereich zwischen 40 und 100 erreicht.

8. Verglasung nach Anspruch 1, **dadurch gekennzeichnet, dass** das aktive System ein elektrochemisches System ist, insbesondere ein elektrisch steuerbares System mit veränderlichen energetischen/optischen Eigenschaften, wie ein vollkommen festes, polymeres, hybrides, Viologen-basiertes elektrochromes System, ein System mit optischem Ventil.

9. Verglasung nach einem der vorhergehenden Ansprüche, **dadurch gekennzeichnet, dass** sie um einen Winkel zwischen 15 und 75°, vorzugsweise 30 und 60°, bevorzugt nahe 45° gegenüber von einer Lichtquelle ausgehenden einfallenden Strahlen geneigt ist.

10. Verglasung nach einem der vorhergehenden Ansprüche, **dadurch gekennzeichnet, dass** sie eine Verglasung von Kraftfahrzeugen, von Luftfahrzeugen, von Schiffen oder von Gebäuden bildet.

11. Verglasung nach Anspruch 9, **dadurch gekennzeichnet, dass** sie als Head-up-Display vom Typ "HUD" verwendet wird.

12. Verglasung nach Anspruch 9, **dadurch gekennzeichnet, dass** sie als Rückspiegel, Trennwand, Spiegel verwendet wird.

## Claims

1. Laminated glazing suitable for being used as a cluster positioned in front of a vehicle dashboard, **characterized in that** it comprises two substrates (S1, S2) between which an active system having a colored state and an uncolored state is disposed, one of the substrates (S1) being coated on one of its faces and on at least one portion of the surface, with a first coating of thin layers with an anti-reflecting functionality, the other face of this same substrate (S1) being coated over at least one portion of the surface with a second coating of thin layers with a reflection-enhancing functionality, the second reflection-enhancing coating being coated by said active system, the active system being laminated by means of a laminating insert to the second substrate (S2), and **in that** the second reflection-enhancing layer comprises a stack of thin layers made of dielectric material with alternately high and low refractive indices, and comprises successively:
• a first layer with a high index, the refractive index n₁ lying between 2.0 and 2.5 and the geometric thickness e₁ lying between 5 and 50 nm,
• a second layer with a low index, the refractive index n₂ lying between 1.35 and 1.65 and the geometric thickness e₂ lying between 40 and 150 nm,
• a third layer with a high index, the refractive index n₃ lying between 2.0 and 2.5 and the geometric thickness e₃ lying between 15 and 100 nm,
• optionally a fourth layer with a low index, the refractive index n₄ lying between 1.35 and 1.65 and the geometric thickness e₄ lying between 40 and 150 nm,
and **in that** the first and second substrates are thin substrates, of which the thickness of each of the substrates is between 0.4 mm and 1.8 mm.

2. Glazing according to Claim 1, **characterized in that** the first anti-reflecting coating comprises a stack of thin layers made of a dielectric material with alternately high and low refractive indices, and being defined in the following manner. It comprises successively:
• a first layer with a high index, the refractive index n₁ lying between 1.8 and 2.3 and the geometric thickness e₁ lying between 5 and 50 nm,
• a second layer with a low index, the refractive index n₂ lying between 1.35 and 1.65 and the geometric thickness e₂ lying between 5 and 50 nm,
• a third layer with a high index, the refractive index n₃ lying between 1.8 and 2.3 and the geometric thickness e₃ lying between 40 and 150 nm,
• a fourth layer with a low index, the refractive index n₄ lying between 1.35 and 1.65 and the geometric thickness e₄ lying between 40 and 150 nm.

3. Glazing according to either of Claims 1 or 2, **characterized in that** the first layer with a high index and/or the third layer with a high index are based on a metal oxide or oxides chosen from zinc oxide, tin oxide, zirconium oxide or based on a nitride or nitrides chosen from silicon nitride and/or aluminum nitride or based on mixed tin/zinc oxides (SnxZnyOz), or mixed zinc-titanium oxides (TiZnOₓ), or based on mixed silicon/titanium oxide (SixTiyOz).

4. Glazing according to either of Claims 1 or 2, **characterized in that** the second layer with a low index and/or the fourth layer with a low index are based on silicon oxide, silicon oxynitride and/or oxycarbide or a mixed oxide of silicon and aluminum.

5. Glazing according to claim 1, **characterized in that** the first layer with a high index and/or the third layer with a high index are based on a metal oxide or oxides chosen from titanium oxide, zirconium oxide, tantalum oxide, niobium oxide, bismuth oxide, used alone or as a mixture.

6. Glazing according to Claim 1, **characterized in that** the second layer with a low index and optionally the fourth layer with a low index are based on silicon oxide, silicon oxynitride and/or oxycarbide or a mixed oxide of silicon and aluminum.

7. Glazing according to any one of the preceding claims, **characterized in that** it reaches a contrast in reflection of between 40 and 100 between a colored state and an uncolored state of the active system.

8. Glazing according to Claim 1, **characterized in that** the active system is an electrochemical system, notably an electrocontrollable system with variable energy/optical properties such as an all-solid electrochromic system, a polymeric system, a hybrid system, a viologen system, or a system with an optical valve.

9. Glazing according to any one of the preceding claims, **characterized in that** it is inclined at an angle of between 15 and 75°, preferably between 30 and 60°, preferably close to 45°, with respect to the incident rays coming from a light source.

10. Glazing according to one of the preceding claims, **characterized in that** it constitutes glazing for motor vehicles, aircraft, boats or buildings.

11. Glazing according to Claim 9, **characterized in that** it is used as a Head Up display screen of the "HUD" type.

12. Glazing according to Claim 9, **characterized in that** it is used as a rearview mirror, separating partition, or a mirror.
